# EUROPEAN PATENT SPECIFICATION

(11) **EP 1 462 484 B1**
(45) Date of publication and mention of the grant of the patent: **02.07.2008**
(21) Application number: 04005253.2
(22) Date of filing: 05.03.2004
(51) Int. Cl.: C09B 69/00, C09B 29/085

(54) **Colouring agent containing a mono- or disaccharide**
Mono- oder Disaccharid enthaltende Färbemittel
Colorant contenant un mono- ou disaccharide

(30) Priority: 05.03.2003 IT FI20030056
(43) Date of publication of application: 29.09.2004
(73) Proprietor: Universita Degli Studi di Firenze, 50121 Florence (IT)
(72) Inventor: Bianchini, Roberto, 50141 Firenze (IT); Catelani, Giorgio, 56021 Cascina (IT); Seu, Gianfranco, 09129 Cagliari (IT); Bartalucci, Giuditta, 50135 Firenze (IT)
(74) Representative: Gervasi, Gemma

(56) References cited:
- WO-A-01/12727
- US-A- 4 966 607
- US-A- 5 503 770
- US-B1- 6 281 269
- MAZITSOS C F ET AL: "Galactosyl-biomimetic dye-ligands for the purification of Dactylium dendroides galactose oxidase" JOURNAL OF CHROMATOGRAPHY A, ELSEVIER SCIENCE, NL, vol. 954, no. 1-2, 19 April 2002 (2002-04-19), pages 137-150, XP004348584 ISSN: 0021-9673
- REDDINGTON M V: "New Glycoconjugated Cyanine Dyes as Fluorescent Labeling Reagents" JOURNAL OF THE CHEMICAL SOCIETY, PERKIN TRANSACTIONS 1, CHEMICAL SOCIETY. LETCHWORTH, GB, vol. 1, 1998, pages 143-148, XP002077544 ISSN: 0300-922X

## Description

### FIELD OF THE INVENTION

The present innovation relates to new colouring products in which the colouring agent comprises one or more sugar molecules, the process to prepare them and their use in the dyeing of textile products.

### STATE OF THE ART

In the field of dyeing of fabrics one of most frequent technical problems is represented by the dyeing of mixed cellulosic and hydrophobic fibres.

The difficulties in this type of manufacturing come from:
1) the impossibility of using similar dyes for two types of materials, intrinsically different, in order to obtain uniform dyeing on a inhomogeneous substrate;
2) the "necessity" of dirty a substrate with dyes affine to the other in manufacturing including different dyes for different materials. As a matter of fact we must stress that in a mixed dyeing process of different fibres, dyes stain prevalently one fibre and generally dirties the other textiles present, therefore lowering the level of final results. Upon considering that generic dyes are not specifically selective for each type of fibre, this is a problem that cannot be disregarded, since it is present in almost all the industrial dyeings.

Therefore the availability of "multipurpose" dyes is deeply felt, because these are dyes that are easy to use also in dyeing of mixed materials avoiding inconveniences above described.

The urgency of developing new dyes with a lower environmental impact than those actually used is felt as well.

The problem of pulling down environmental pollutants is extremely present in the textile industry. This industry uses to drain into surface waters the major part of not biodegradable polluting charge mainly given by dyeing refuses, since dyes are used at high concentrations in the dyeing processes and a considerable percentage of them remains in the dyeing bath at the end of the process.

From these considerations the need stems to pull down, or at least reduce, the amount of not biodegradable dyes discharged in the environment developing new dyes endowed with a lesser environmental impact, due to their better biodegradability, to their improved tinctorial properties, and/or to their use at lower concentrations in the dyeing bath.

Among textile dyes most used up today there are aromatic azoic, with the following general formula (A) where X and Y are generic substituent of amino group: 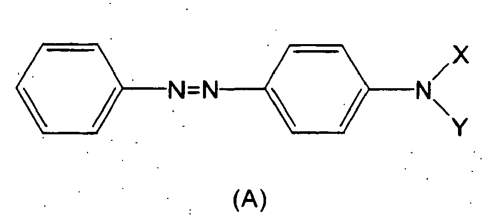 Just these azoic dyes are interested by an environmental problem, since the N=N group is suspected to produce aromatic amines, that in their turn are suspected in turn to be cancerogenic and mutagenic.

Even the European Community has been interested in this topic, and since some years, they started a regulation project (CEE 880/92) concerning productive cycles in different industrial sectors, including the textile one. The project is called ECOLABEL, and it is charged to give environmental warranties labels to products that present, in their life time cycle (production and utilisation), a reduced environmental impact to lower environmental problems. In this context; some products have been classified not compatible with this aim, and among them there are many dyes having an azoic chromophore; in particular, the derivatives of 4-aminoazobenzene of formula (B) have been declared unusable: 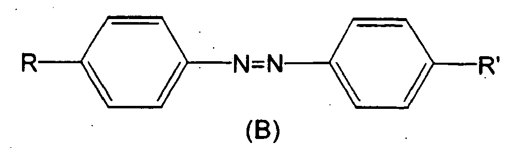 The environmental impact in this type of dyes is attributable not only to the dye itself, but even to the products obtained from degradative treatments actually used for surface waters.

These treatments are mainly oxidative and mostly carried out with not selective, strong oxidants. Up to today any exhaustive investigation on the results of similar processes is available, and any precise information is given in studies carried out on waters containing aromatic pollutants, but the species generated from these treatments are suspected to be dangerous for life and environment in a way comparable to the dyes from which they are obtained.

This argument strengthens the need to solve the problem to the source, and this aim could be obtained by pouring in the rivers a lower quantity of pollutants, but also using dyes able to be drained avoiding environmental risks.

As far as the Applicant knows, dyes bound to sugar molecules have been already disclosed, but they only included polysaccharides or complex molecules of modified sugars. For example, in the US Patent No. 6,281,269 waterfast ink-jet ink compositions are disclosed, containing dyes bound to saccharides through tri-chloro or di-chloro triazine; that are azoic dyes reacted with amino-sugars, or anthraquinonic dyes wherein the aromatic NH₂ group is directly bound to the carbonylic carbon of a selected sugar. According to US 6,281,269, when the sugar is reacted with the anilinic group of the chromophore, the position on sugar molecule involved in the bond is the C-1 position, thus resulting in the loss of pyranosidic structure of the sugar, and the transformation of the sugar molecule into a simple polyolic chain takes finally place, so that no trace of a properly called sugar molecule can be found in the modified dye.

### SUMMARY OF THE INVENTION

Now the Applicant has surprisingly found that, upon binding molecules of commercially available dyes with one or more molecules of a mono- or di-saccharide through an appropriate spacer, new colouring agents are obtained, having a wider application field and a lower environmental impact than that of the starting products.

Subject of the present invention is therefore a colouring agent comprising a chromophore, characterised in that the said chromophore is bound to one or more neutral, natural mono-saccharide or di-saccharide, through a spacer, with the proviso that the following compounds
(a) - (c) , comprising a chromophore and a spacer,

   (a) X-[-(CₙH₂ₙ)-NH-(CₘH₂ₘ)-W-B(OH)₂]ₚ

   wherein:
   X is a chromophore or a fluorophore;
   W is a optionally substituted aromatic ring;
   n is 0, 1 or 2;
   m is 1 or 2; and
   p is 1 or 2; 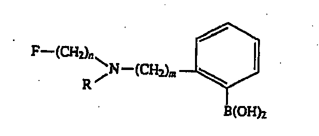
   wherein:
   F represents a fluorophore;
   R is elected from the group consisting of lower aliphatic and aromatic functional groups and n and m each is 0, 1 or 2 with n+m being 2 or 3;
      and 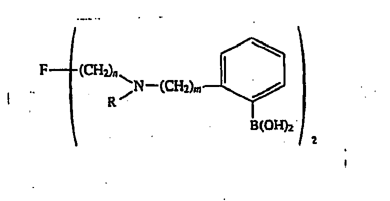
   wherein:
   F represents a fluorophore;
   R is elected from the group consisting of lower aliphatic and aromatic functional groups and n and m each is 0, 1 or 2 with n+m being 2 or 3; are excluded.

The process for the preparation of the above said colouring agent, the dispersions which comprise it, and their use for dyeing textile materials are further subject of the present invention.

Features and advantages of the colouring agents according to the invention will be illustrated in details in the following description.

### DETAILED DESCRIPTION OF THE INVENTION

The cromophores, that can be modified according to the invention through a bond with one or more saccharidic portions and a spacer as described hereinafter, can be selected amongst chromophores bearing chemical groups easily subjected to modifications, such as COOH, OH, CN, halides and NH₂ groups; and can be azoic or anthraquinonic in nature. According to the invention preferred anthrachinonic chromophores are selected from the group consisting of 1-amino-antraquinone and 1-amino-2-phenoxy-4-hydroxy-antraquinone. Amongst azoic chromophores of possible use according to the invention, 2-[ethyl-(4'-phenylazo-phenyl)amino]-ethanol, 2-[hydroxy-ethyl-(4'-phenylazo-phenyl)-amino]-ethanol, 2-[(4'-phenylazo-phenyl)-amino]-ethanol, 2-[hydroxy-ethyl-(4'-para-nitro-phenylazo-phenyl)-amino]-ethanol, 3-[(4'-phenylazo-phenyl)-amino]-propionitrile and -4-phenylazo-(2'-methoxy-4'-phenylazo-4"-nitro)-phenol are preferred.

The colouring agents of the invention comprise the chromophore bound to one or more molecules of neutral and natural mono- or di-saccharides through a suitable spacer, which is bound to the dye on one side and bound to the primary or secondary hydroxy groups of the saccharide molecule. Therefore, in the so-obtained product according to the invention the pyranosidic structure of the saccharidic molecule is maintained, since the anomeric carbon is not interested in the covalent bond between the saccharidic molecule and the spacer.

According to the present invention, with the expression "neutral and natural mono-saccharide or di-saccharide" a non modified, naturally occurring mono-saccharide or di-saccharide is meant. As a mono-saccharide, a compound selected from the group consisting of glucose, galactose, mannose, rhamnose, and fructose, is preferably meant, whereas the di-saccharide is preferably selected from the group consisting of lactose, saccharose, cellobiose, and maltose.

According to the invention glucose, galactose and lactose are preferably selected; and amongst these, lactose is particularly preferred. As a matter of fact, lactose possesses a further environmental advantage that does not relate to the problem of dyes disposal per se, but concerns the pollution of surface waters.

Lactose is in fact waste matter of diary industry, representing instead a cost as contaminant since it determines eutrophication in the ground water table. Therefore the involvement of lactose in the preparation of the present dyes is a way to recycle waste material, conferring a further advantage if compared with other sugars of possible use.

Dyeing ability of the present glycoconjugated colouring agents, has been verified in comparison with corresponding starting dyes, not modified with sugar molecules.

In particular, it has been observed that the present modified dyes, contrarily to not glycoconjugated starting dyes, are able to dye in a homogeneous way also textile materials including different fibres, and specifically mixed hydrophobic and hydrophilic fibres.

Also, a better interaction dye-fibre has been obtained with the present dyes on all types of tested fibres, that are cellulosic fibres, like cotton, and proteic ones, like wool and silk, and also on hydrophobic fibres, like polyester and nylon, and also on mixed ones. The considerable affinity of the present dyes towards textile fibres of whatever nature, makes them advantageous not only because they are 'universal', but because they also allow to obtain a dyeing process using reasonable quantities of dyes and to work in conditions of almost complete depletion of polluting charge directly in the dyeing bath, therefore avoiding a relevant pollution of the dyes in excess.

A further advantage of the present colouring agents is the fact that the bond with glycosidic moiety increases its biodegradability through digestion by microorganisms, that found in the molecule itself a useful nourishment for their survival and proliferation.

The present colouring agents are used in form of powder or paste, or aqueous dispersions that, besides the colouring agent of the invention, may possibly comprise textile assistant commonly used in this field.

In the case of powders, drying agents can possibly be comprised in the formulation.

The colouring agents of the invention comprising a chromophore bound to one or more neutral, natural mono-saccharide or di-saccharide, through a bi-functional spacer, may be prepared by a process comprising the following steps:
i) protection of all free hydroxylic groups of the said mono-saccharide or di-saccharide except the one chosen as active bonding site;
i') reaction of the protected mono-saccharide or di-saccharide coming from step i) with a derivative of the spacer able to react with the free hydroxylic group and with the chromophore;
ii) reaction of the said chromophore with the residual bonding site of the spacer previously bound with the protected mono- or di-saccharide coming from step i') to obtain a product in which the chromophore is bound to the mono-saccharide or di-saccharide protected, through the spacer;
iii) deprotection of the product coming from step ii) to obtain the desired final colouring agent.

The protection of hydroxyl groups in step i) can be for example carried out with 2,2-dimethoxypropane as acetoning agent, according to routine methods not affecting the glycosidic bond and request the presence of catalytic quantities of *p*-toluenesulfonic acid, thus obtaining the corresponding isopropylidene derivative.

In the following examples, a method analogous to that described by Yoshino et al. in *Glycoconjugate J.* 1986, 3, 7-14, has been used.

For some saccharides, such as glucose and galactose, the corresponding product protected on four of the five free hydroxyl positions are available on the market at low costs. Therefore, the present process can be carried out starting from step i'), using directly these commercial products.

As far as lactose is concerned, the reaction described by Yoshino would provide two products resulting from a mixed acetonation on the two free hydroxyl groups, one product with hydroxyl groups in 2' and 6' both free, and the other product with the only hydroxyl group in position 2' free, and it is therefore preferred to proceed as described by G. Catelani et al., Carbohydrate Research 1997, 298, 78-85, thus obtaining the isopropylidenic derivative with the free hydroxyl group in position 6'.

The coupling between the protected mono-saccharide or di-saccharide with dyes of various type in step ii) can be carried out through specific reactions, avoiding to modify commercial dyes.

This reaction in step ii) can be carried out in a solvent, such as tetrahydrofuran, preferably in the presence of catalytic amounts of dimethyl-amino-pyridine and of N'-(3-dimethylaminopropyl)-N-ethylcarbodiimide as activating agent.

Step ii) has been found appreciable both for purity and yield of the final product.

A similar procedure can be followed to obtain a final coupling product comprising two molecules of a mono-saccharide or di-saccharide, by reaction with a bi-functional dye; in this case, the formation of the product having a ratio saccharide:dye of 2:1 occurs, beside coupling products having a 1:1 ratio between the two components.

Once the copulation product between dye and the mono- or di-saccharide is obtained, the deprotection of saccharidic moiety of the molecule is carried out; thus freeing the corresponding hydroxylic groups, so that a hydrosoluble final product is obtained.

According to a preferred embodiment of the invention, the deprotection reaction in step iii) of the present process is carried out by acid hydrolysis, for example by a treatment with an aqueous solution of trifluoroacetic acid 90%, or a treatment with less aggressive acids at higher temperature, for example with acetic acid 60-80%. In these conditions the formation in high yield, comprised between 70 and 90%, of the required product coming from the total opening of the isopropylidenic protections, has been observed; while the formation of by-products coming from the breaking of the glycosidic bond has not been observed, nor of products coming from partial deprotection.

The colouring agents according to the invention have shown a great resistance in absolute, but mainly to basic attacks. This characteristic is relevant, due to the fact that dyeing of cellulosic fibres is carried out mainly in a weak basic environment.

Spacers according to the invention are preferably chosen among acyl or diacyl groups having from 2 to 6 carbon atoms in the alkyl chain, such as succinyl groups, and linear alkyl groups having from 2 to 6 carbon atoms, such as propyl, butyl and pentyl groups.

In the case of final products comprising more than one saccharidic molecule, more spacers can be used, and preferably one spacer for each saccharidic molecule.

Products comprising for example an alkyl group C2-C6 as spacer can be prepared by reacting the protected mono- or di-saccharide coming form step i) with the corresponding dibromoalkane, preferably in an organic solvent, such as THF, in the presence of an high concentration of an inorganic base and a crown ether, able to solubilise the strong inorganic base in the organic solvent. The so obtained bromine-ether is then reacted with the dye, as in step ii) above described.

The products of the invention comprising instead a diacyl group as spacer can be obtained by reacting the mono- or di-saccharide coming from step i) with the corresponding anhydride, for example with succinic anhydride in pyridine in the case a succinyl group must be inserted as spacer, according to procedures known in the art and in standard conditions known to any skilled person.

The following examples are reported to give a non-limiting illustration of the invention.

All the reagents used in the following examples are commercially available and, unless differently specified, are used without further purification.

The prepared products have been analysed by mass spectrometry, confirming exactly the structure described, and by NMR. The NMR spectra have been registered with a Varian Gemini 200 MHz Instrument using CDCl₃ as solvent, unless differently specified. The chemical shift values are expressed in δ (ppm) using TMS as the reference. The coupling constant values J are reported in Hertz.

Rf values are referred to TLC on silica gel plates 0.25 mm (Merck F254) thick, using, unless specified, the same eluent used for the chromatographic column.

### EXAMPLE 1

### Synthesis of the 2,3:5,6:3',4'-Tri-O-isopropylidenlactose-dimethyl-acetale-6'-succinic mono-ester (Compound 2)

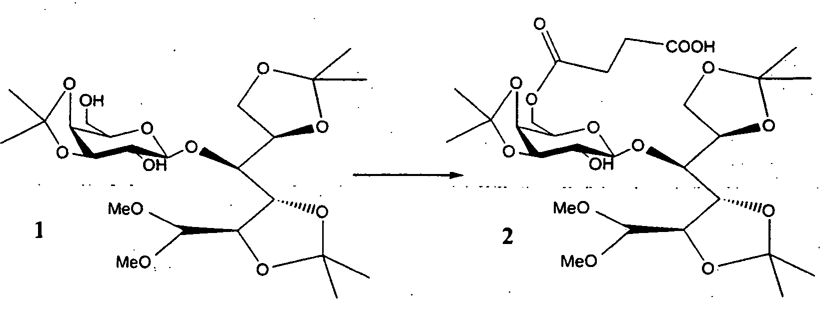

At 2 g of **1** (3.9 mmol) obtained as described in G. Catelani et al., Carbohydrate Research 1997, 298, 78-85, solved in 20 ml of pyridine, 420 mg of succinic anhydride are added (4.3 mmol).

The mixture is stirred at pyridine reflux for 24 hours. At the end of reaction the crude product is solved in 50 ml of CH₂CI₂ and transferred into a separatory funnel
where 100 ml of an aqueous solution of HCI 5% are added.

Many washing with CH₂Cl₂ are carried out.

The organic phase is then concentrated to the rotatory evaporator and the raw (a yellowish oil) purified through FCC (stationary phase: silica gel, eluent: AcOEt; Rf(**2**) = 0.27).
966 mg of a pale yellow oil are obtained (**2**) (yield 42%).

### EXAMPLE 2

### Synthesis of 2'-O-carboxymethyl 2,3:5,6:3',4'-Tri-O-isopropylidenlactose-dimethyl-acetale-6'-succinic monoester (Compound 3)

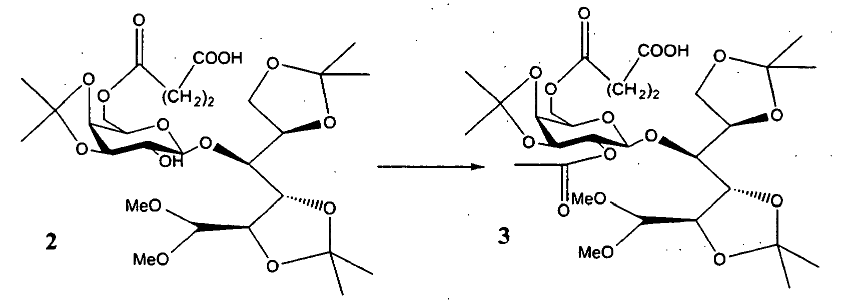

To 1.384 g of product **2** (obtained as described in Example 1) solved in 15 ml of pyridine are added 10 ml of acetic anhydride. The mixture is stirred at room temperature in the presence of a CaCl₂ stopper.

After 5 hours the reaction results finished; the raw material is then poured onto a separatory funnel; 100 ml of aqueous HCI (5%) are added, and the aqueous phase is washed with further aliquots of CH₂Cl₂ .

The crude material obtained is then transferred in a round flask, cooled at 0°C in ice and neutralised by slowly adding of an aqueous solution saturated with NaHCO₃; the reaction is exothermic and CO₂ is naturally developed, and therefore attention must be paid to leave the mixture under constant stirring.
1.249 g of a pale yellow oil are obtained (**3**) (yield 84%).

Rf(3) = 0.22 in AcOEt/n-hexane 5:2.

### EXAMPLE 3

### Synthesis of the 1,2:5,6-Di-O-isopropylidenglucofuranose-3-succinic monoester (Compound 5)

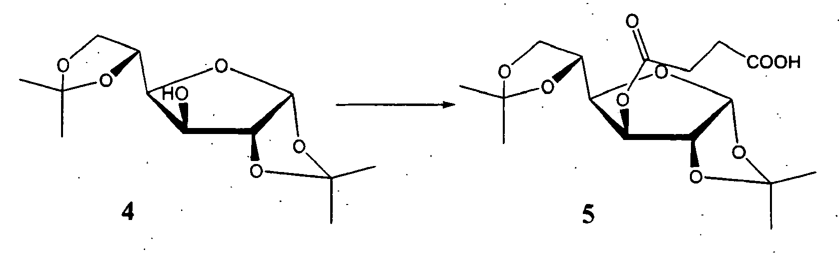

To 3 g of the product **4** (11.53 mmol) commercially available, and 6 ml of pyridine; are added 1.383 g of succinic anhydride (13.83 mmol) and the mixture is kept at reflux for 22 hours.

The raw is diluted in 50 ml of dichloromethane and is transferred in a separatory funnel in which 50 ml of an aqueous solution of HCI 5% are added.

The organic phase is concentrated using the rotatory evaporator.

The product **5** is purified using FCC (stationary phase: silica gel; eluent: AcOEt/n-hexane 5/2, Rf(**5**) = 0.18).
2.3 g of a pale yellow oil are obtained (**5**) (yield 55%).

### EXAMPLE 4

### Synthesis of the 1,2:3,4-Di-O-isopropylidengalactose-6-succinic monoester (Compound 7)

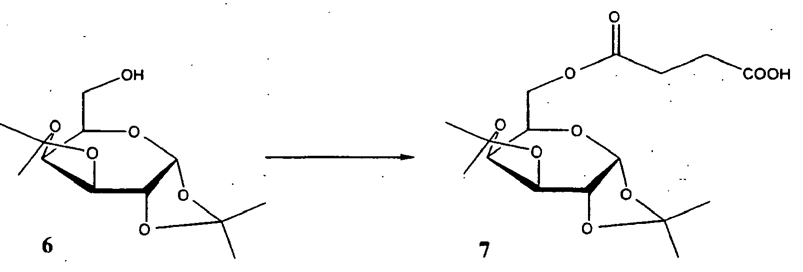

To 3 g of product **6** (11.53 mmol) commercially available and 6 ml pyridine 1.383 g of succinic anhydride (13.83 mmol) are added; the mixture is kept at reflux for 6 hours. The crude product is diluted with 50 ml of dichloromethane and transferred into a separatory funnel where 50 ml of an aqueous HCI 5% solution are added; the aqueous layer is then extracted with dichloromethane. Finally it is concentrated.

A single product is obtained purified by crystallisation from AcOEt/n-hexane.
2,5 g of a white solid are obtained as crystals (yield 60%).

Rf(**7**) = 0.38 in AcOEt/n-hexane 5/2.

### EXAMPLE 5

### Synthesis of the 2-[ethyl-(4'-phenylazo-phenyl)-amino]ethyl 1,2:3,4-di-O-isopropylidengalactose-6-succinate (Compound 8)

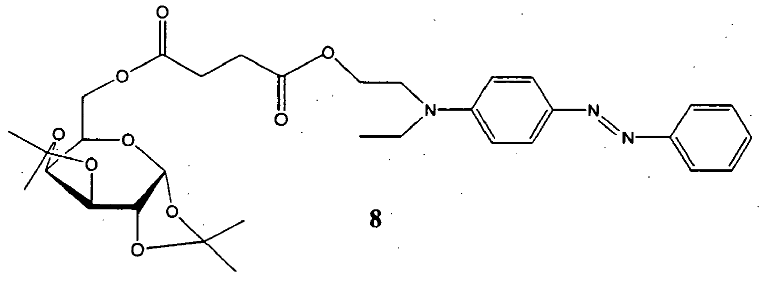

To 3 g 1,2:3,4-Di-*O*-isopropylidengalactose-6-succinate monoester **7** (8,33 mmol) prepared as described in the Example 4, 2.69 g of 2-[ethyl-(4'-phenylazo-phenyl)-amino]-ethanol (10 mmol) commercially available, 1.92 g of N'-(3-dimethylaminopropyl)-N-ethylcarbodiimide (EDC) (10 mmol), 305 mg of dimethyl-amino-pyridine (DMAP) (2.5 mmol) are dissolved in 8.33 ml of tetrahydrofuran (THF) (1 M solution). The round flask is stopped with a rubber cork and nitrogen is refluxed through; the mixture is kept under stirring at room temperature for 16 hours.

Then the mixture is concentrated under reduced pressure, 50 ml of CH₂CI₂ are added; then it is transferred in a separatory funnel, washed with saturated aqueous NaHCO₃ (3×30ml) and brine (1×30ml) solution and then again concentrated under reduced pressure. Product **8** is purified via FCC (stationary phase: silica gel; eluent: Et.Pet./AcOEt/Net₃ 3/2/0,1; Rf(**8**) = 0.5).
5.08 g of a yellow-orange solid are obtained **(8)** (quantitative yield).
¹H NMR (**8**): 7.77-7.72 (4H, m); 7.37-7.22 (3H, m); 6.61 (2H, m); 5.40 (1H, d, J=5); 4.48-4.44 (1 H, m); 4.18-4.04 (6H, m); 3.92-3.89 (1 H, m); 3.44 (2H, m); 3.30-3.27 (2H, m); 2.48 (4H, bs); 1.37 (3H, s); 1.31 (3H, m); 1.68 (6H, s); 1.03 (3H, t, J=6.6).

### EXAMPLE 6

### Synthesis of compound 9

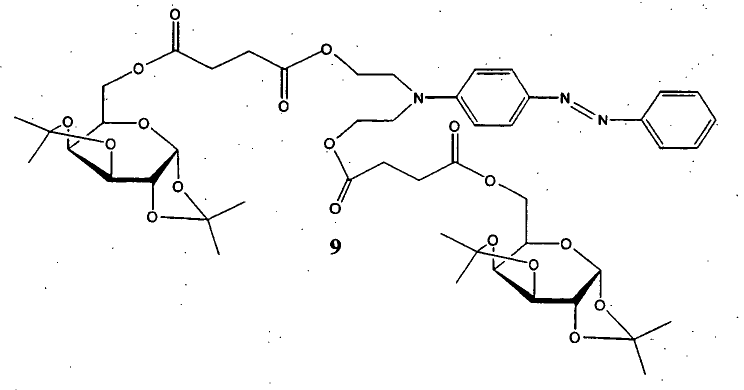

To 893 mg of 1,2:3,4-Di-O-isopropylidengalactose-6-monosuccinic ester 7 (2.5 mmol) prepared as described in the Example 4 , 324 mg of 2-[hydroxy-ethyl-(4'-phenylazo-phenyl)-amino]-ethanol (1.14 mmol) commercially available, 480 mg of

EDC (2.5 mmol), 42 mg of DMAP (0.34 mmol), are dissolved in 1.2 ml of THF (solution 1 M).

A rubber cork is put over the round flask and nitrogen stream put in; the mixture is kept under stirring at room temperature for 16 hours.

The contents of round flask is concentrated under reduced pressure and added with 50 ml of CH₂CI₂; the obtained solution is transferred into a separatory funnel, then washed with saturated NaHCO₃ solution (3 × 30 ml) and brine (1 ×30 ml) and concentrated again under reduced pressure. The product is purified through FCC (stationary phase: silica gel; eluent: Et.Pet./AcOEt/Net₃ 3/2/0.1; Rf(**9**) = 0.19). 1,01 g of a solid yellow-orange product are obtained (**9**) (yield = 91%).
¹H NMR (**9**): 7.85-7.78 (4H, m); 7.43-7.39 (3H, m); 6.79 (2H, m); 5.49-5.46 (2H, m); 4.55 (2H, m); 4.26-4.14 (12H, m); 4.00-3.97 (2H, m); 3.66 (4H, m); 2.59 (8H; bs); 1.46 (6H, s); 1.39 (6H, s); 1.27 (12H, s).

### EXAMPLE 7

### Synthesis of compound 10

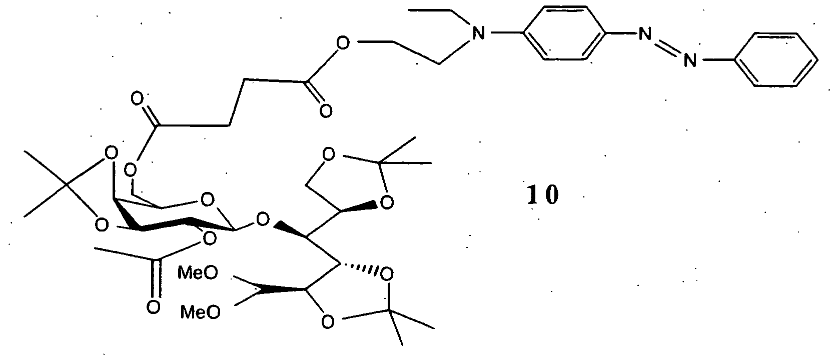

To 1.25 g of 2'-*O*-carboxymethyl 2,3:5,6:3',4'-Tri-*O*-isopropylidenlactose-dimethyl-acetale-6'-succinic monoester **3** (1.9 mmol) prepared as described in the Example 2, 2.610 mg of 2-[hydroxy-ethyl-(4'-phenylazo-phenyl)-amino]-ethanol (2.28 mmol) commercially available, 437 mg of EDC (2.28 mmol), 70 mg of DMAP (0.57 mmol), are dissolved in 1.9 ml of THF (1 M solution).

A rubber stopper and nitrogen stream are also put in, the mixture being under stirring at r.t. for 16 hours.

The mixture is concentrated under reduced pressure, then added with 40 ml of CH₂CI₂; the obtained solution is transferred in a separatory funnel, washed with a saturated solution of NaHCO₃ (3×25 ml) and brine (1×30 ml), then concentrated under reduced pressure again.

Product **10** is purified through FCC (stationary phase: silica gel; eluent:

Et.Pet./AcOEt/Net₃ 3/3/0.1; Rf(**10**) = 0.37). 1.6 g of a yellow-orange solid are obtained **(10)** (yield 93%).
¹H NMR **(10):** 7.88-7.80 (4H, m); 7.50-7.36 (3H, m); 6.79-6.75 (2H, m); 5.00 (1 H, m); 4.75 (1H, d, J=8.3); 4.47-4.05 (8H, m); 3.99-3.95 (4H, m); 3.65 (2H, t, J=6.3); 3.49 (2H, q, J=7.1); 3.40 (3H, s); 3.40 (3H, s); 2.62 (4H, bs); 2.11 (3H, s); 1.54 (3H, s); 1.46 (3H, s); 1.35 (6H, s); 1.31 (3H, s); 1.30 (3H, s); 1.22 (3H, 7.1).

### EXAMPLE 8

### Synthesis of the compound 11

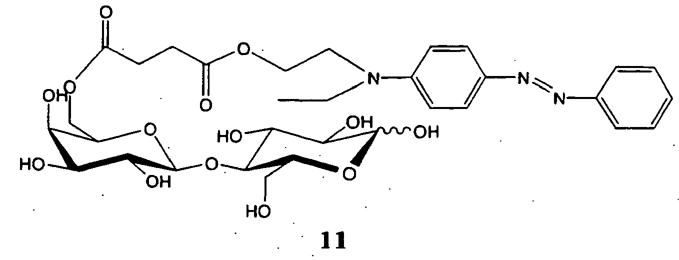

To 1.2 g of 10 (1.33 mmol) prepared as described in the Example 7, 25 ml of a solution of CF₃COOH (90%) are added.

The mixture is left under magnetic stirring for 24 hours at r.t., then the reaction is quenched adding slowly at 0° C under stirring a cold saturated solution of NaHCO₃ up to effervescence disappeared.

The solution changed from dark red up to yellow-orange.

The solution is then transferred into a separatory funnel and the product extracted with CH₂CI₂.

The considerable quantity of salt formed led to difficulty in the phases separation, while the addition of brine to aqueous phase gives the separation possible.

The organic layer is concentrated at reduced pressure and product purified through inverse flash-chromatography (stationary phase: silica gel Lichroprep®
RP-8 (40-63 µm); eluent: H₂O/CH₃CN=1/1; Rf(**11**) = 0.61.
271 mg of **11** are obtained (yield 30%).
¹H NMR **(11** in CD₃OD): 7.85-7.78 (4H, m); 7.52-7.38 (3H, m); 6.87 (2H, m); 5.09 (1 H, d, J=3.7); 4.50 (1 H, d, J=7.7); 4.34-4.23 (4H, m); 3.86-3.77 (6H, m); 3.68 (2H, t, J=6.1); 3.56-3.44 (6H, m); 2.65 (4H, m); 1.22 (3H, t, J=6.9).

### EXAMPLE 9

### Synthesis of the compound 12

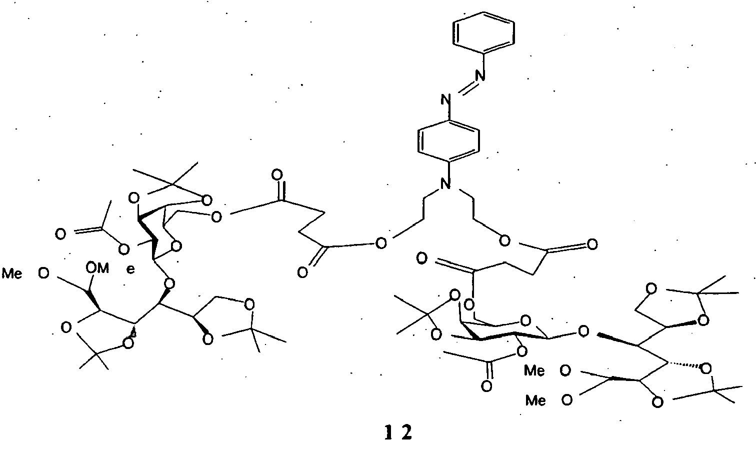

To 2.28g of 2'-*O*-carboxymethyl 2,3:5,6:3',4'-Tri-*O*-isopropylidenlactose-dimethyl-acetale-6'-succinic monoester **10** (3.5 mmol) prepared as described in Example 7 453 mg of 2-[hydroxy-ethyl-(4'-phenylazo-phenyl)-amino]-ethanol (1.6 mmol) commercially available, 676 mg of EDC (3.5 mmol), 110 mg of DMAP (0.9 mmol), are dissolved in 3 ml of THF (1 M solution).

A rubber cork is inserted and a nitrogen stream activated and the mixture left to react at r.t. under stirring for 16 hours.

The mixture is concentrated at room temperature, then added with 40 ml of CH₂CI₂; the solution obtained is transferred into a separatory funnel and washed with saturated solution of NaHCO₃ (3×25ml) and brine (1×30ml) then concentrated under reduced pressure.

Product **12** is purified using FCC (stationary phase: silica gel; eluent:

Et.Pet./AcOEt/Net₃ 3/3/0.1; Rf(**12**) = 0.17).
1.27 g of a yellow-orange product are obtained (**12**) (yield 88%).
¹H NMR (**12**): 7.89-7.80 (4H, m); 7.50-7.38 (3H, m); 6.83 (2H, m); 4.99 (2H, m); 4.75 (2H, m); 4.47-4.22 (13H, m); 4.11-4.05 (6H, m); 3.96-3.92 (9H, m); 3.73 (4H, t, J=5.9); 3.40 (6H, s); 3.40 (6H, s); 2.62 (8H, bs); 2.11 (6H, s); 1.54 (6H, s); 1.46 (6H, s); 1.35 (12H, s); 1.31 (6H, s); 1.30 (6H, s).

### EXAMPLE 10

### Synthesis of the 2-[ethyl-(4'-phenylazo-phenyl)-amino]ethyl 1,2:5,6-di-O-isopropylidenglucofuranose-3-succinate (Compound 13)

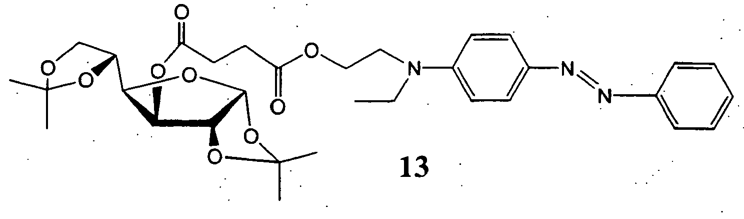

To 1.91 g of 1,2:5,6-Di-O-isopropylidenglucose succinic monoester **5** (5.3 mmol) prepared as described in Example 3, 1.71 g of 2-[ethyl-(4'-phenylazo-phenyl)-amino]-ethanol (6.37 mmol) commercially available, 1.31 g of N,N'-dicyclohexylcarbodiimide (DCC) (6.37 mmol), 194 mg of DMAP (9 mmol), are dissolved in 5.3 ml of THF (1 M solution).

A rubber stopper is put in and a nitrogen stream inserted, the mixture is then kept under stirring at r.t. for 16 hours.

The dicyclohexyl-urea that is formed in the reaction is eliminated via paper filtration of the raw product recovered in the minimum quantity of dichloromethane.

The filtered solution is concentrated under reduced pressure and added with 40 ml of CH₂CI₂; the solution so obtained is transferred into a separatory funnel, washed with saturated solution of NaHCO₃ (3 × 25 ml) and brine (1 × 30 ml) and then concentrated under reduced pressure.

The product **13** is purified via FCC (stationary phase: silica gel; eluent:

Et.Pet./AcOEt/CH₂CI₂ 2.5/1/0.5; Rf(**13**) = 0.47).
2,49 g of a yellow-orange solid product **(13)** are obtained (yield 90%).
¹H NMR (**13**): 7.89-7.81 (4H, m); 7.51-7.36 (3H, m); 6.79-6.73 (2H, m); 5.86 (1H, d, J=3.7); 5.25 (1 H, d; J=2.7); 4.50 (1 H, d, J=3.7); 4.31 (2H, t, J=6.3); 4.19 (2H, m); 3.99-4.11 (2H, m); 3.61 (2H, t, J=6.3); 3.43 (2H, q, J=7.1); 2.62; (4H, bs); 1.51 (3H, s); 1.39 (3H, s); 1.30 (3H, s); 1.29 (3H, s); 1.19 (3H, t, J=7.1).

### EXAMPLE 11

### Synthesis of the 2-[ethyl-(4'-phenylazo-phenyl)-amino]ethyl 1,2-O-isopropylidenglucofuranose-3-succinate (Compound 14)

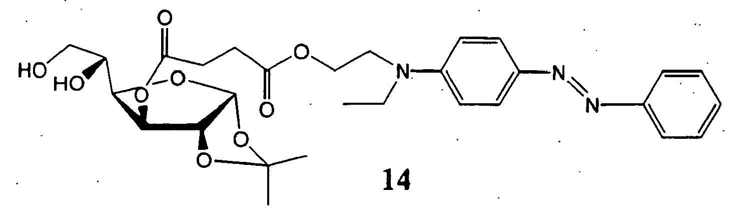

To 203 mg of **13** prepared as described in the Example 10, are added with 10 ml of an aqueous solution of 80% CH₃COOH slowly and under stirring.

The purple solution obtained is kept at 60°C for 2 hours.

The raw product is concentrated under reduced pressure and the colour is yellow-orange again; the product is then purified through FCC (stationary phase: silica gel; eluent: AcOEt/n-hexane 2/1; Rf(**14**) = 0.15).
175 mg of a solid yellow-orange product (**14**) are obtained (yield = 94%).
¹H NMR (**14**): 7.89-7.81 (4H, m); 7.51-7.37 (3H, m); 6.80-6.75 (2H, m); 5.89 (1H, d, J=3.7); 5.34 (1 H, d; J=2.7); 4.52 (1 H, d, J=3.7); 4.31 (2H, t, J=6.3); 4.20 (2H, dd, J=8.5, 2.7); 3.87-3.62 (5H, m); 3.48 (2H, q, J=7.1); 2.68-2.59 (4H, m); 1.50 (3H, s); 1.29 (3H, s); 1.22 (3H, t, J=7.1).

### EXAMPLE 12

### Synthesis of the 2-[ethyl-(4'-phenylazo-phenyl)-amino]ethyl-glucofuranose-3-succinate (Compound 15)

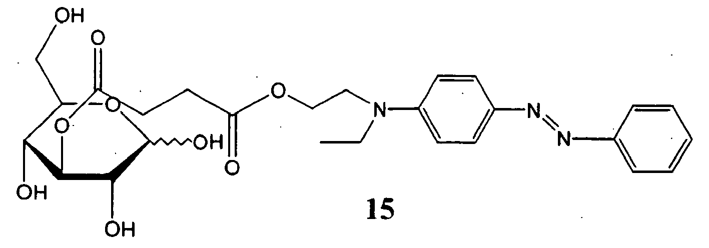

To 155 mg of **14** prepared as described in the Example 11 are added to 5 ml of an aqueous 90% solution of CF₃COOH slowly and under stirring.

The purple resulting solution is kept at r.t. for 2 hours. The crude material is concentrated under reduced pressure also adding toluene, recovered with dichloromethane.

Then the mixture is transferred into a separatory funnel neutralising with a saturated NaHCO₃ solution up to the purple colour is disappeared and yellow-orange comes back; the aqueous phase is washed many times with dichloromethane up to the disappearance of the yellow colour from the aqueous phase, and finally the organic layer is dried over MgSO₄.

The product **15** is purified using FCC (stationary phase: silica gel; eluent:

AcOEt/MeOH 95/5; Rf(**15**)=0.25).
115 mg of a yellow-orange solid (**15**) are obtained (yield 81 %).
¹H NMR (**15** in DMSO): 7.79-7.75 (4H, m); 7.54-7.40 (3H, m); 6.85 (2H, m); 6.53 (1H, d, J=4.4); 5.18-4.95 (2H, m); 4.76-4.70 (1 H, m); 4.61-4.47 (1 H, m); 4.20-4.18 (1 H, m); 3.64-3.21 (6H, m); 2.57-2.48 (4H, m); 1.12 (3H, t, J=5.3).

### EXAMPLE 13

### Synthesis of the 2-[ethyl-(4'-phenylazo-phenyl)-amino]ethyl glucofuranose-3-succinate (Compound 15)

To 300 mg of **14** prepared as described in Example 10 are added 15 ml of an aqueous solution of 90% CF₃COOH, slowly and under stirring.

The obtained purple solution is kept at r.t. for 12 hours. The raw material is concentrated under reduced pressure adding toluene and recovering with dichloromethane. The mixture is transferred into a separatory funnel upon neutralising with saturated aqueous solution of NaHCO₃ up to disappearance of the purple colour and the coming back of the yellow-orange; the aqueous phase in washed many times with dichloromethane up the colour yellow is disappeared from the aqueous phase; the organic layer is finally dried over MgSO₄. The product **15** is purified via FCC (silica gel; AcOEt/MeOH=95/5; Rf(29)=0.25). 252 mg of yellow orange product (**15**) are obtained as solid (yield 90%).
¹H NMR (**15** in DMSO): 7.79-7.75 (4H, m); 7.54-7.40 (3H, m); 6.85 (2H, m); 6.53 (1 H, d, J=4.4); 5.18-4.95 (2H, m); 4.76-4.70 (1 H, m); 4.61-4.47 (1 H, m); 4.20-4.18 (1 H, m); 3.64-3.21 (6H, m); 2.57-2.48 (4H, m); 1.12 (3H, t, J=5.3).

### EXAMPLE 14

### Synthesis of the 2-ethyl-(4'-phenylazo-phenyl)-aminolethyl galactose-6-succinate (Compound 16)

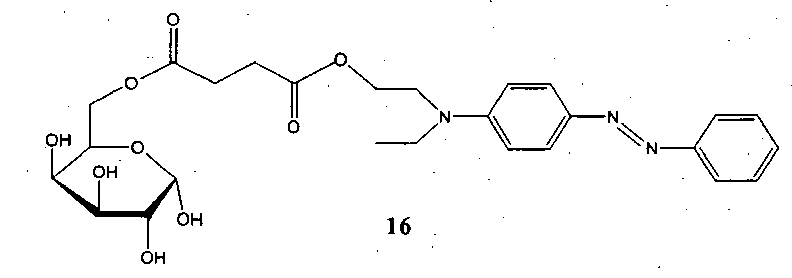

The compound 8 prepared as described in the Example 5 is submitted to acid hydrolysis in the conditions described above for the Example 12, thus obtaining the complete deprotection of the hydroxylic groups to give product **16.**

### EXAMPLE 15

### Synthesis of the 4-bromo-butyl-1-[1,2:5,6-di-O-isopropyliden)glucosyl] ether (Compound 17)

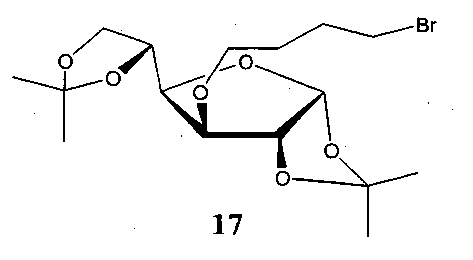

To 1 g of 1,2:5,6-Di-O-isopropylidenglucofuranose **4** (3.84 mmol) 860 mg of KOH (15.36 mmol) and 13 mg of 18-crown-6 are added to 19 ml of THF; the mixture is left under magnetic stirring and r.t. for 1 hour; obtaining a milky suspension to which 2.3 ml of dibromobutane (19.2 mmol) are added and still left under stirring for 4 hours. Then the mixture is neutralised upon addition of a saturated solution of NH₄CI. Then it is transferred in a separatory funnel and the mixture is extracted with dichloromethane, the organic phase dried over MgSO₄ and then the solution is concentrated under reduced pressure; the product **17** is purified via FCC (stationary phase: silica gel; eluent: AcOEt/Et.Pet. 4/1; Rf(**17**) = 0.39). 1.06 g of a yellow oil (**17**) are obtained (yield 70%).
¹H NMR (**17**): 5.86 (1H, d, J=3.7); 4.51 (1 H, d, J=3.7); 4.32-4.22 (2H, m); 4.12-4.05 (2H, m); 4.00-3.93 (1H, m); 3.85 (1H, d, J=3.1); 3.60 (2H, m); 3.43 (2H, t, J=6.5); 2.03-1.89 (2H, m); 1.78-1.64 (2H, m); 1.49 (3H, s); 1.41 (3H, s); 1.34 (3H, s); 1.31 (3H, s).

### EXAMPLE 16

### Synthesis of the 3-bromo-propyl-1-[1,2:5,6-di-O-isopropyliden)glucofuranosyl] ether (Compound 18)

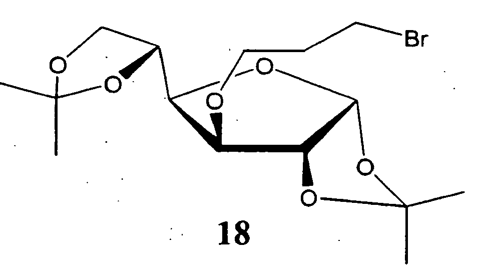

To 1 g of 1,2:5,6-Di-O-isopropylidenglucose **4** (3.84 mmol) commercially available are dissolved in 19 ml of THF (0,5% H₂O), 860 mg of KOH (15.36 mmol) and 13 mg of 18-crown-6; the mixture is left under magnetic stirring at r.t. for 1 hour, so obtaining a milky suspension, to which 1,95 ml of dibromopropane (19.2 mmol) are added, still leaving the stirring for 72 hours.

The neutralisation is reached by purifying the raw material in a saturated aqueous solution of NH₄CI.

The mixture is then transferred into a separatory funnel and extracted with dichloromethane, the organic phase resulting is dried over anhydrous MgSO₄ then concentrated under reduced pressure.

The product **18** is purified via FCC (silica gel; AcOEt/Et.Pet.=1/4; Rf **(18)** = 0.31.
183 mg of **18** are obtained (yield 12%).
¹H NMR (**18**): 5.87 (1 H, d; J=3.5); 4.56 (1 H, d, J=3.5); 4.28 (1 H, m); 3.89-4.12 (4H, m); 3.83-3.61 (2H, m); 3.52 (2H, t, J=6.4); 2.09 (2H, m); 1.50 (3H, s); 1.43 (3H, s); 1.35 (3H, s); 1.32 (3H, s).

### EXAMPLE 17

### Synthesis of 5-bromo-pentyl-1-[1,2:5,6-di-O-isopropyliden)glucofuranosyl] ether (Compound 19)

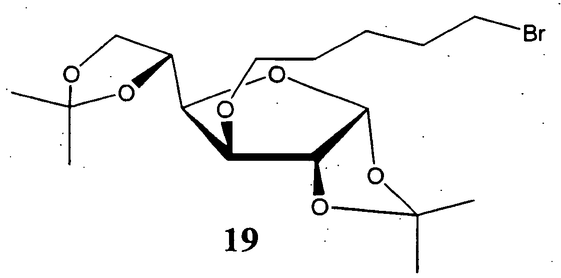

To 1 g of 1,2:5,6-Di-*O*-isopropylidenglucofuranose **4** (3.84 mmol) commercially available, 860 mg of KOH (15.36 mmol) and 13 mg of 18-crown-6 are put in 19 ml of THF (0.5% H₂O); the mixture is left under magnetic stirring at r.t. for 1 hour, so obtaining a milky suspension, to which 2,62 ml of dibromopentane (19.2 mmol) are added, still leaving the stirring for 3 hours.

The neutralization is reached by purifying the raw material in a saturated aqueous solution of NH₄CI.

The mixture is then transferred into a separatory funnel and extracted with dichloromethane, the resulting organic phase is dried over anhydrous MgSO₄ then concentrated under reduced pressure.

The product **19** is purified via FCC (silica gel; AcOEt/Et.Pet.=1/4; Rf (**19**) = 0.30.
1.3 g of **19** are obtained (yield 82,8%).
¹H NMR (**19**): 5.87 (1 H, d, J=3.7); 4.53 (1 H, d, J=3.7); 4.35-4.25 (1 H, m); 4.14-3.95 (3H, m); 3.85 (1 H, m); 3.65-3.47 (2H, m); 3.41 (2H, t, J=6.7); 1.92-1.85 (2H, m); 1.62-1.48 (4H, m); 1.50 (3H, s); 1.43 (3H, s); 1.35 (3H, s); 1.32 (3H, s).

### EXAMPLE 18

### Synthesis of the Compound 20

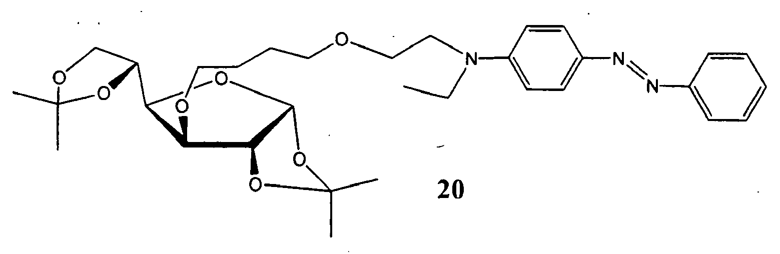

To 200 mg of 2-[ethyl-(4-phenylazo-phenyl)-amino]-ethanol (0.74 mmol) commercially available, 166 mg of KOH (2.98 mmol) and 20 mg of 18-crown-6 and 293 mg of **17** (0.74 mmol) prepared as described in Example 15 are solved in 5,5 ml of THF (0.5% H₂O); the mixture is left under magnetic stirring at r.t. for 48 hours. The reaction is quenched by neutralising with a saturated NH₄CI.

The mixture is then transferred into a separatory funnel and extracted with dichloromethane, up to the aqueous layer results colourless. The organic phase resulting is dried over anhydrous MgSO₄ then concentrated under reduced pressure.

The product **20** is purified via FCC (silica gel; AcOEt/m-hexane.=2/3; Rf (**20**) = 0.21. 260 mg of **20** are obtained (yield 60%).
¹H NMR (**20**): 7.88-7.80 (4H, m); 7.47-7.37 (3H, m); 6.75 (2H, m); 5.87 (1H, d, J=3.7); 4.52 (1 H, d, J=3.7); 4.25-4.35 (1 H, m); 4.18-3.95 (3H, m); 3.85 (1H, m); 3.62-3.46 (10H, m); 1.64 (3H, t, J=3.0); 1.59 (4H, bs); 1.50(3H, s); 1.42 (3H, s); 1.34 (3H, s); 1.31 (3H, s).

### EXAMPLE 19

### Synthesis of Compound 21

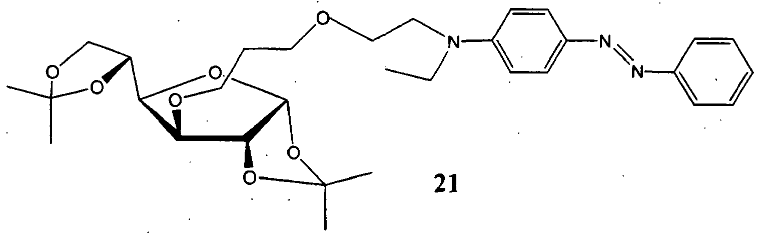

The procedure described in the Example 19 is repeated starting from compound **18** prepared as described in the example 16, so obtaining the compound **21**.

### EXAMPLE 20

### Synthesis of Compound 22

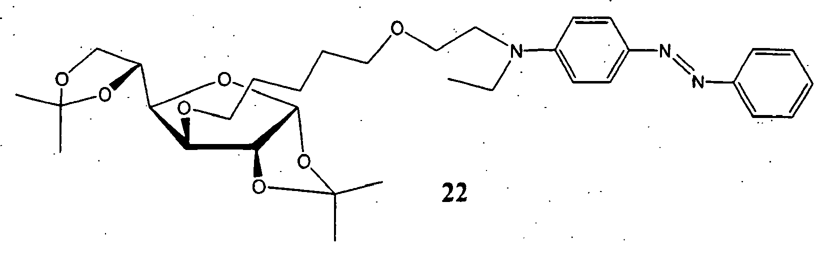

The procedure described in the Example 19 has been repeated starting from compound **19** prepared as described in the example 17, obtaining Compound **22**.

### EXAMPLE 21

### Synthesis of the Compound 23

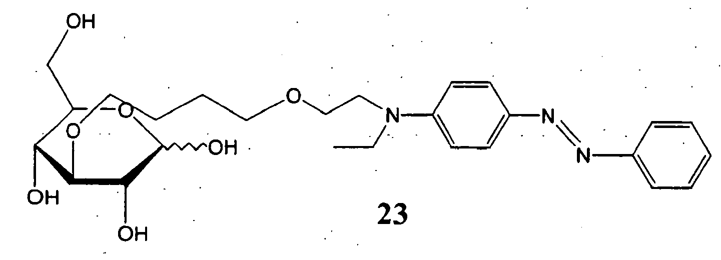

To 603 mg of **20** (1.054 mmol) prepared as described in the Example 18, 10 ml of 90% CF₃COOH are added; the solution, that becomes immediately red-purple, is left under magnetic stirring at r.t. for 45 min then the trifluoroacetic acid is removed by reduced pressure and toluene; the raw materials recovered with CH₂Cl₂ and neutralised by dripping a saturated NaHCO₃ solution up to the disappearance of the red-purple colour and its change to yellow-orange; the aqueous phase is washed many times with CH₂CI₂ and concentrated under reduced pressure.

The product **23** is purified using FCC (silica gel; CH₂Cl₂/isopropanol 4/1; Rf(**23**) = 0.32). 449 mg of **23** are obtained (yield 82%).
¹H NMR (**23** in DMSO-d6): 7.77-7.73 (4H, m); 7.53-7.40 (3H, m); 6.79 (2H, m); 4.90 (1 H, m); 4.30 (1 H, m); 3.67-2.98 (15H, m); 1.53 (4H, bs); 1.11 (3H, t, J=6.7).

### EXAMPLE 22

### Synthesis of the Compound 24

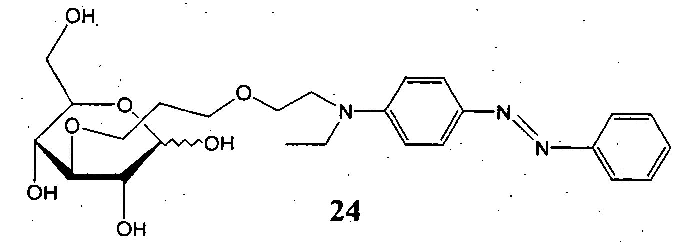

The procedure described in the Example 21 is repeated starting from compound **21** prepared as described in the Example 19, so obtaining compound **24**.

### EXAMPLE 23

### Synthesis of the Compound 25

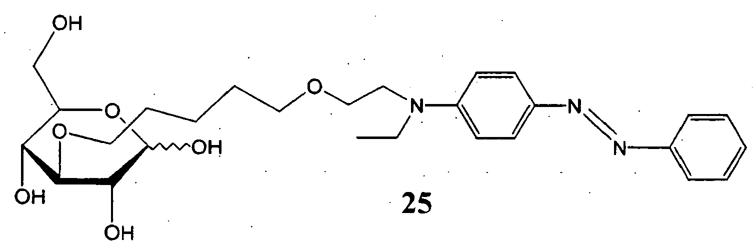

The procedure described in the Example 21 has been repeated starting from Compound **22** prepared as described in the Example 20, so obtaining the Compound **25**.

### EXAMPLE 24

### Synthesis of the Compound 26

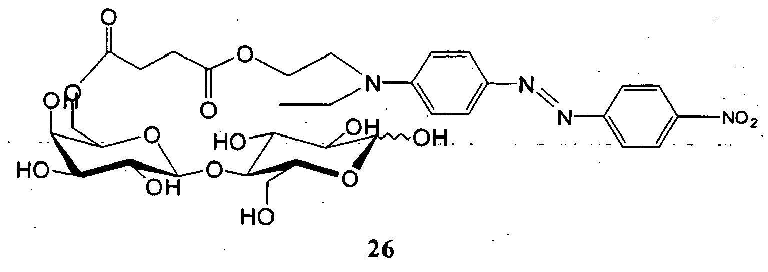

The procedure described in Examples 7 and 8 has been repeated replacing the chromophore 2-[hydroxy-ethyl-(4'-phenylazo-phenyl)-amino]-ethanol by the commercially available chromophore 2-[hydroxy-ethyl-(4'-para-nitro-phenylazo-phenyl)-amino]-ethanol, thus obtaining the compound of formula **26.**

### EXAMPLE 25

### Synthesis of Compound 27

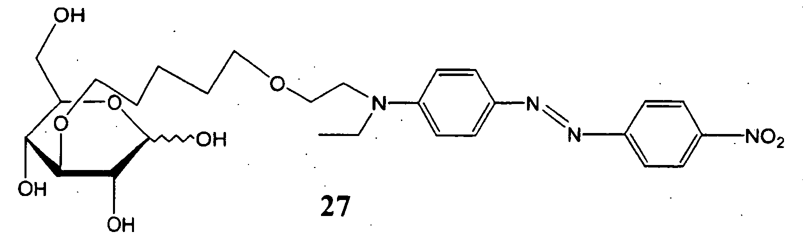

The procedure described in Examples 20 and 21 has been repeated replacing the chromophore 2-[hydroxy-ethyl-(4'-phenylazo-phenyl)-amino]-ethanol by the commercially available chromophore 2-[hydroxy-ethyl-(4'-para-nitro-phenylazo-phenyl)-amino]-ethanol, thus obtaining the compound of formula **27.**

### EXAMPLE 26

### Synthesis of Compound 28

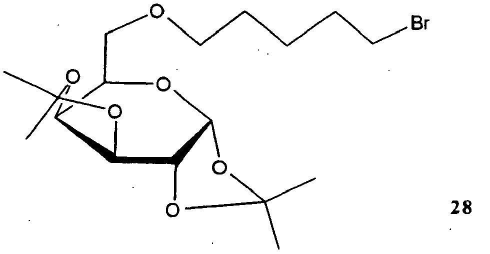

The procedure described in the Example 17 has been repeated replacing the product **4** by the commercially available product **6** described in Example 4, thus obtaining the compound **28**.

### EXAMPLE 27

### Synthesis of Compound 29

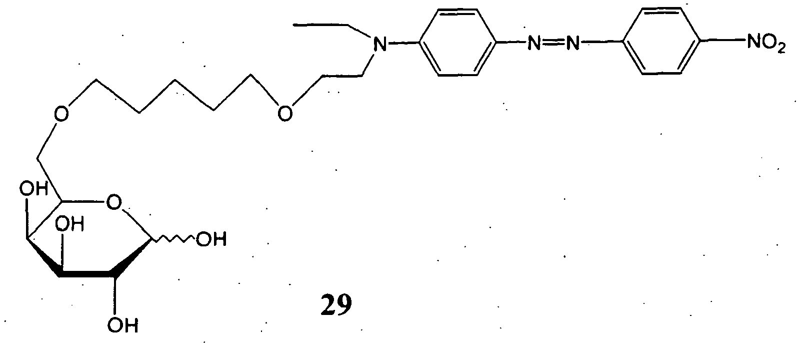

Starting from the Compound **28**, prepared as described in Example 26, and following the procedure of Example 20 replacing the chromophore 2-[hydroxy-ethyl-(4'-phenylazo-phenyl)-amino]-ethanol by the commercially available chromophore 2-[hydroxy-ethyl-(4'-para-nitro-phenylazo-phenyl)-amino]-ethanol, the Compound **29** has been prepared.

### EXAMPLE 28

### Synthesis of Compound 30

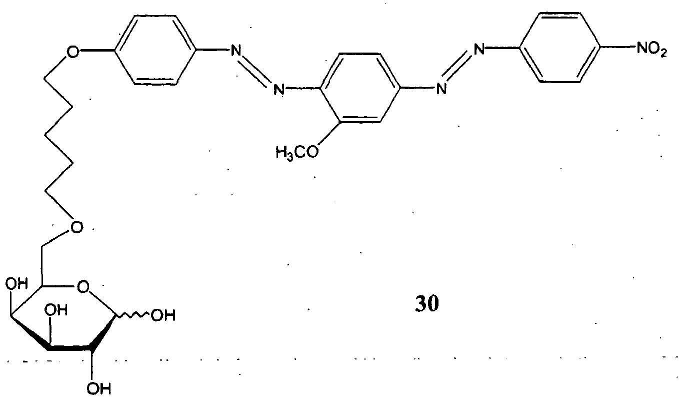

Starting from the Compound **28**, prepared as described in Example 26, and following the procedure of Example 20 replacing the chromophore 2-[hydroxy-ethyl-(4'-phenylazo-phenyl)-amino]-ethanol by the commercially available chromophore, the Compound 30 has been prepared.

### EXAMPLE 29

### Synthesis of Compound 31

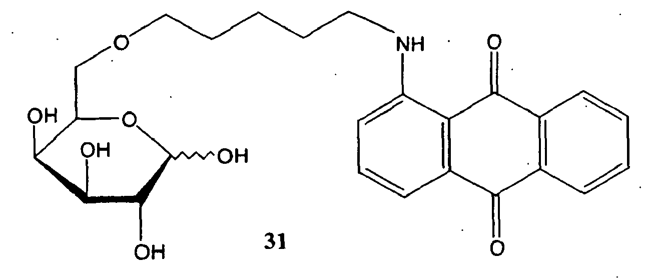

Starting from the Compound **28**, prepared as described in Example 26, and following the procedure of Example 20 replacing the chromophore 2-[hydroxy-ethyl-(4'-phenylazo-phenyl)-amino]-ethanol by the commercially available chromophore the Compound **31** has been prepared.

### EXAMPLE 30

### Synthesis of Compound 32

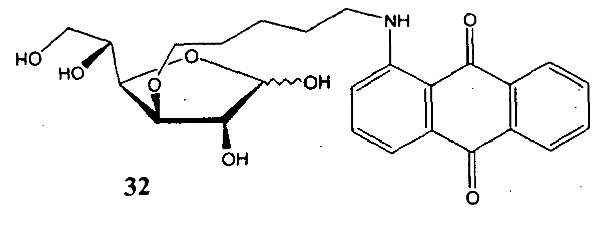

Starting from the Compound **19** prepared as described in Example 17, and following the procedure of Example 20 replacing the chromophore 2-[hydroxy-ethyl-(4'-phenylazo-phenyl)-amino]-ethanol by the commercially available chromophore, the Compound **32** has been prepared.

### EXAMPLE 31

### Synthesis of Compound 33

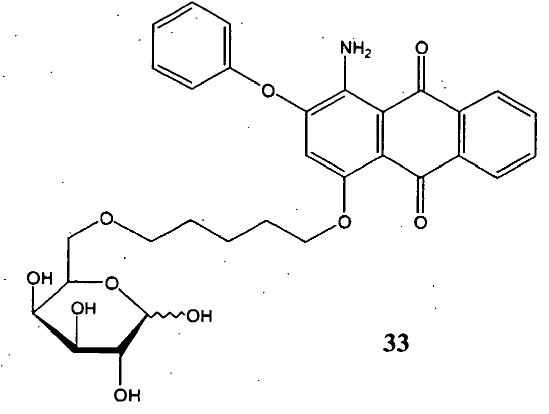

Starting from the Compound **28,** prepared as described in Example 26, and following the procedure of Example 20 replacing the chromophore 2-[hydroxy-ethyl-(4'-phenylazo-phenyl)-amino]-ethanol by the commercially available, the Compound **31** has been prepared.

The present colouring agents were used to dye various kind of fabrics, i.e. fabrics made of wool, silk, nylon, cotton, polyester microfibers, and mixed fabrics cotton-nylon and mixed fabrics polyurethane-polyester.

Their dyeing capability and fastness to washing and mechanical rubbing has been evaluated according to the procedure set in UNI EN ISO105X12/97 (PRO 021/99-PRO 017/99), thus finding that they can be successfully used to dye different fabrics, and that the so-obtained coloured fabrics show a good to excellent fastness to washing and mechanical rubbing.

## Claims

1. A colouring agent comprising a chromophore, **characterised in that** said chromophore is bound to one or more neutral, natural mono-saccharide or disaccharide through a spacer, with the proviso that the following compounds (a) - (c) , comprising a chromophore and a spacer,
(a) X-[-(CₙH₂ₙ)-NH-(CₘH₂ₘ)-W-B(OH)₂]ₚ
wherein:
X is a chromophore or a fluorophore;
W is a optionally substituted aromatic ring;
n is 0, 1 or 2;
m is 1 or 2; and
p is 1 or 2; 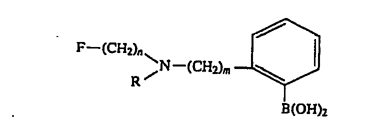
wherein:
F represents a fluorophore;
R is elected from the group consisting of lower aliphatic and aromatic functional groups and n and m each is 0, 1 or 2 with n+m being 2 or 3;
and 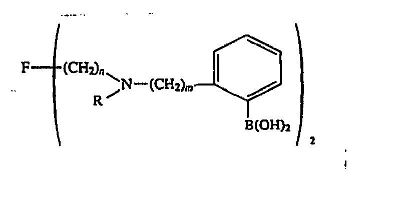
wherein:
F represents a fluorophore;
R is elected from the group consisting of lower aliphatic and aromatic functional groups and n and m each is 0, 1 or 2 with n+m being 2 or 3; are excluded.

2. The colouring agent according to claim 1, wherein the said chromophore comprises functionalisable groups.

3. The colouring agent according to claim 2, wherein the said functionalisable groups are selected among the group consisting of COOH, OH, CN, halides and NH₂.

4. The colouring agent according to claim 1, wherein the said chromophore is selected from azoic chromophores.

5. The colouring agent according to claim 1, wherein the said chromophore is selected from anthraquinonic chromophores.

6. The colouring agent according to claim 4, wherein the said azoic chromophore is selected from the group consisting of 2-[ethyl-(4'-phenylazo-phenyl)amino]-ethanol, 2-[hydroxy-ethyl-(4'-phenylazo-phenyl)-amino]-ethanol, 2-[(4'-phenylazophenyl)-amino]-ethanol, 2-[hydroxy-ethyl-(4'-para-nitro-phenylazo-phenyl)-amino]-ethanol, 3-[(4'-phenylazo-phenyl)-amino]-propionitrile and 4-phenylazo-(2'-methoxy-4'-phenylazo-4"-nitro)-phenol.

7. The colouring agent according to claim 5, wherein the said anthraquinonic chromophore is selected from the group consisting of 1-amino-anthraquinone and 1-amino-2-phenoxy-4-hydroxyanthraquinone.

8. The colouring agent according to claim 1, wherein the said spacer is covalently bound to the said chromophore on one side, and to a primary or secondary hydroxyl group of the said mono- or di-saccharide on the other side.

9. The colouring agent according to claim 1, wherein the said mono-saccharide is selected from the group consisting of glucose, galactose, mannose, rhamnose, and fructose.

10. The colouring agent according to claim 1, wherein the said di-saccharide is selected from the group consisting of lactose, saccharose, cellobiose, and maltose.

11. The colouring agent according to claim 1, wherein the said spacer is selected from the group consisting of acyl and diacyl groups having from 2 to 6 carbon atoms in the alkyl chain, and linear alkyl groups having from 2 to 6 carbon atoms.

12. The colouring agent according to claim 11, wherein the said spacer is selected from the group consisting of succinyl, propyl, butyl and pentyl groups.

13. The colouring agent according to claims 1-12, chosen among the following compounds:
- Compound in which the said mono-saccharide or di-saccharide is lactose, the said chromophore is 2-[hydroxy-ethyl-(4'-phenylazo-phenyl)-amino]-ethanol and the said spacer is a succinyl group (Compound 11);
- Compound in which the said mono-saccharide or di-saccharide is glucose, said chromophore is 2-[ethyl-(4'-phenylazo-phenyl)-amino]-ethanol and said spacer is a succinyl group (Compound 15);
- Compound in which said mono-saccharide or di-saccharide is galactose, said chromophore is 2-[ethyl-(4'-phenylazo-phenyl)-amino]-ethanol and said spacer is succinyl group (Compound 16);
- Compound in which said mono-saccharide or di-saccharide is glucose, said chromophore is 2-[ethyl-(4'-phenylazo-phenyl)-amino]-ethanol and said spacer is butyl group (Compound 23);
- Compound in which said mono-saccharide or di-saccharide is glucose, said chromophore is 2-[ethyl-(4'-phenylazo-phenyl)-amino]-ethanol and said spacer is propyl group (Compound 24);
- Compound in which said mono-saccharide or di-saccharide is glucose, said chromophore is 2-[ethyl-(4'-phenylazo-phenyl)-amino]-ethanol and said spacer is pentyl group (Compound 25);
- Compound in which said mono-saccharide or di-saccharide is lactose, said chromophore is 2-[hydroxy-ethyl-(4'-para-nitro-phenylazo-phenyl)-amino]-ethanol and said spacer is succinyl group (Compound 26);
- Compound in which said mono-saccharide or di-saccharide is galactose, said chromophore is 2-[hydroxy-ethyl-(4'-para-nitro-phenylazo-phenyl)-amino]-ethanol and said spacer is pentyl group (Compound 27);
- Compound in which said mono-saccharide or di-saccharide is galactose, said chromophore is 2-[hydroxy-ethyl-(4'-para-nitro-phenylazo-phenyl)-amino]-ethanol and said spacer is pentyl group (Compound 29);
- Compound in which said mono-saccharide or di-saccharide is galactose, said chromophore is 2-[hydroxy-ethyl-(4'-para-nitro-phenylazo-phenyl)-amino]-ethanol and said spacer is pentyl group (Compound 30);
- Compound in which said mono-saccharide or di-saccharide is galactose, said chromophore is 1-amino-anthraquinone and said spacer is pentyl group (Compound 31);
- Compound in which said mono-saccharide or di-saccharide is glucose, said chromophore is 1-amino-anthraquinone and said spacer is pentyl group (Compound 32);
- Compound in which said mono-saccharide or di-saccharide is galactose, said chromophore is 1-amino2-phenoxy-4-hydroxyanthraquinone and said spacer is pentyl group (Compound 33).

14. Process for the preparation of a colouring agent comprising a chromophore bound to one or more neutral, natural mono-saccharide or di-saccharide, through a spacer,
said process comprising the following steps:
i) protection of all free hydroxylic groups of the said mono-saccharide or disaccharide except that chosen as active bonding site;
i') reaction of the protected mono-saccharide or di-saccharide coming from step i) with a derivative of the spacer able to react with the residual hydroxylic free group and with the chromophore;
ii) reaction of the said chromophore with the mono-saccharide or di-saccharide coming from step i'), to obtain a product comprising the chromophore bound to the mono-saccharide or di-saccharide protected and modified with the spacer;
iii) deprotection of the product coming from step ii) to obtain the desired final product, wherein the chromophore is bound to the mono-saccharide or disaccharide molecule through the said spacer.

15. The process according to claim 14, wherein the said mono-saccharide or disaccharide is protected in step i) with isopropylidenic groups.

16. The process according to claim 14, wherein the said protection in step i) is carried out with 2,2-dimethoxypropane in the presence of catalytic amounts of p-toluensulfonic acid.

17. The process according to claim 14, wherein when a final product having a diacyl group as the spacer is wanted, the reaction in step i') is performed through esterification of the protected mono- or di-saccharide coming from step i) with the corresponding anhydride.

18. Process according to claim 14, wherein when a final product having a linear alkyl group with from 2 to 6 carbon atoms as the spacer is wanted, the reaction in step i') is carried out by reacting the protected mono- or di-saccharide coming from step i) with the corresponding dibromo-alkane.

19. The process according to claim 14, wherein the said reaction in step ii) is carried out in a solvent in the presence of catalytic amounts of an activating agent.

20. The process according to claim 19, wherein the said solvent is tetrahydrofuran and the said activating agent is selected from between dimethyl-amino-pyridine and N'-(3-dimethylaminopropyl)-N-ethylcarbodiimide.

21. The process according to claim 14, wherein the said deprotection in step iii) is carried out through acid hydrolysis.

22. The process according to claim 21, wherein the said deprotection in step iii) is carried out by a treatment at room temperature with an aqueous solution of 90% trifluoroacetic acid, or upon heating and treating with less aggressive acids, such as 60-80% acetic acid.

23. A dyeing composition comprising at least a colouring agent comprising a chromophore bound to one or more neutral, natural mono-saccharide or disaccharide, through a spacer, and possibly one or more textile assistants.

24. The dyeing composition according to claim 23, in the form of powder.

25. The dyeing composition according to claim 23, in the form of paste or aqueous dispersion.

26. The dyeing composition according to claim 24, further comprising at least a drying agent.

27. Use of a colouring agent comprising a chromophore bound to one or more neutral, natural mono-saccharide or di-saccharide, through a spacer, as dye for textile products.

28. Use according to claim 27, wherein the said textile products are products with mixed fibres both cellulosic and hydrophobic.

## Patentansprüche

1. Farbmittel, umfassend ein Chromophor, **dadurch gekennzeichnet, dass** dieses Chromophor über einen Spacer an ein oder mehrere neutrale, natürliche Monosaccharide oder Disaccharide gebunden ist, unter der Voraussetzung, dass die folgenden Verbindungen (a) - (c), die ein Chromophor und einen Spacer umfassen,
(a) X-[-(CₙH₂ₙ-NH-(CₘH₂ₘ)-W-B(OH)₂]ₚ
in welcher: X ein Chromophor oder ein Fluorophor ist;
W ein gegebenenfalls substituierter aromatischer Ring ist;
n 0, 1 oder 2 ist;
m 1 oder 2 ist; und
p 1 oder 2 ist; 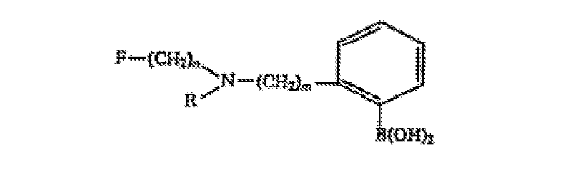 in welcher:
F ein Fluorophor darstellt;
R aus der Gruppe bestehend aus niederen aliphatischen und aromatischen funktionalen Gruppen ausgewählt wird und n und m jeweils 0, 1 oder 2 sind, wobei n + m 2 oder 3 sind;
und 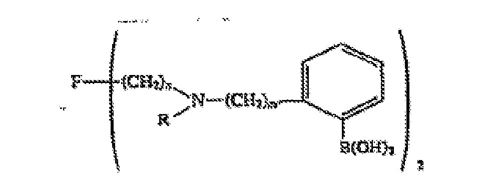
in welcher:
F ein Fluorophor darstellt;
R aus der Gruppe bestehend aus niederen aliphatischen und aromatischen funktionalen Gruppen ausgewählt wird und n und m jeweils 0, 1 oder 2 sind, wobei n + m 2 oder 3 sind; ausgeschlossen sind.

2. Farbmittel gemäß Anspruch 1, wobei das genannte Chromophor funktionalisierbare Gruppen umfasst.

3. Farbmittel gemäß Anspruch 2, wobei die genannten funktionalisierbaren Gruppen aus der Gruppe bestehend aus COOH, OH, CN, Halogeniden und NH₂ ausgewählt werden.

4. Farbmittel gemäß Anspruch 1, wobei das genannte Chromophor aus Azo-Chromophoren ausgewählt wird.

5. Farbmittel gemäß Anspruch 1, wobei das genannte Chromophor aus Anthrachinon-Chromophoren ausgewählt wird.

6. Farbmittel gemäß Anspruch 4, wobei das genannte Azo-Chromophor aus der Gruppe bestehend aus 2-[Ethyl-(4'-phenylazophenyl)amino]ethanol, 2-[Hydroxyethyl-(4'-phenylazophenyl)amino]ethanol,
2-[(4'-Phenylazophenyl)amino]ethanol,
2-[Hydroxyethyl-(4'-para-nitrophenylazophenyl)amino]ethanol,
3-[(4'-Phenylazophenyl)amino]propionitril und 4-Phenylazo-(2'-methoxy-4'-phenylazo-4"-nitro)phenol ausgewählt wird.

7. Farbmittel gemäß Anspruch 5, wobei das genannte Anthrachinon-Chromophor aus der Gruppe bestehend aus 1-Aminoanthrachinon und 1-Amino-2-phenoxy-4-hydroxyanthrachinon ausgewählt wird.

8. Farbmittel gemäß Anspruch 1, wobei der genannte Spacer an einer Seite kovalent an das genannte Chromophor und an der anderen Seite an eine primäre oder sekundäre Hydroxylgruppe des genannten Mono- oder Disaccharids gebunden ist.

9. Farbmittel gemäß Anspruch 1, wobei das genannte Monosaccharid aus der Gruppe bestehend aus Glukose, Galactose, Mannose, Rhamnose und Fructose ausgewählt wird.

10. Farbmittel gemäß Anspruch 1, wobei das genannte Disaccharid aus der Gruppe bestehend aus Lactose, Saccharose, Cellobiose und Maltose ausgewählt wird.

11. Farbmittel gemäß Anspruch 1, wobei der genannte Spacer aus der Gruppe bestehend aus Acyl- und Diacylgruppen mit 2 bis 6 Kohlenstoffatomen in der Alkylkette und linearen Alkylgruppen mit 2 bis 6 Kohlenstoffatomen ausgewählt wird.

12. Farbmittel gemäß Anspruch 11, wobei der genannte Spacer aus der Gruppe bestehend aus Succinyl-, Propyl-, Butyl- und Pentylgruppen ausgewählt wird.

13. Farbmittel gemäß den Ansprüchen 1 - 12, ausgewählt aus den folgenden Verbindungen:
- Verbindung, in der das genannte Monosaccharid oder Disaccharid Lactose ist, das genannte Chromophor 2-[Hydroxyethyl-(4'-phenylazophenyl)amino]ethanol ist und der genannte Spacer eine Succinylgruppe ist (Verbindung 11);
- Verbindung, in der das genannte Monosaccharid oder Disaccharid Glucose ist, genanntes Chromophor 2-[Ethyl-(4'-phenylazophenyl)amino]ethanol ist und genannter Spacer eine Succinylgruppe ist (Verbindung 15);
- Verbindung, in der das genannte Monosaccharid oder Disaccharid Galactose ist, genanntes Chromophor 2-[Ethyl-(4'-phenylazophenyl)amino]ethanol ist und genannter Spacer eine Succinylgruppe ist (Verbindung 16);
- Verbindung, in der das genannte Monosaccharid oder Disaccharid Glucose ist, genanntes Chromophor 2-[Ethyl-(4'-phenylazophenyl)amino]ethanol ist und genannter Spacer eine Butylgruppe ist (Verbindung 23);
- Verbindung, in der das genannte Monosaccharid oder Disaccharid Glucose ist, genanntes Chromophor 2-[Ethyl-(4'-phenylazophenyl)amino]ethanol ist und genannter Spacer eine Propylgruppe ist (Verbindung 24);
- Verbindung, in der das genannte Monosaccharid oder Disaccharid Glucose ist, genanntes Chromophor 2-[Ethyl-(4'-phenylazophenyl)amino]ethanol ist und genannter Spacer eine Pentylgruppe ist (Verbindung 25);
- Verbindung, in der das genannte Monosaccharid oder Disaccharid Lactose ist, genanntes Chromophor 2-[Hydroxyethyl-(4'-para-nitrophenylazophenyl)amino]ethanol ist und genannter Spacer eine Succinylgruppe ist (Verbindung 26);
- Verbindung, in der das genannte Monosaccharid oder Disaccharid Galactose ist, genanntes Chromophor 2-[Hydroxyethyl-(4'-para-nitrophenylazophenyl)amino]ethanol ist und genannter Spacer eine Pentylgruppe ist (Verbindung 27);
- Verbindung, in der das genannte Monosaccharid oder Disaccharid Galactose ist, genanntes Chromophor 2-[Hydroxyethyl-(4'-para-nitrophenylazophenyl)amino]ethanol ist und genannter Spacer eine Pentylgruppe ist (Verbindung 29);
- Verbindung, in der das genannte Monosaccharid oder Disaccharid Galactose ist, genanntes Chromophor 2-[Hydroxyethyl-(4'-para-nitrophenylazophenyl)amino]ethanol ist und genannter Spacer eine Pentylgruppe ist (Verbindung 30);
- Verbindung, in der das genannte Monosaccharid oder Disaccharid Galactose ist, genanntes Chromophor 1-Aminoanthrachinon ist und genannter Spacer eine Pentylgruppe ist (Verbindung 31);
- Verbindung, in der das genannte Monosaccharid oder Disaccharid Glucose ist, genanntes Chromophor 1-Aminoanthrachinon ist und genannter Spacer eine Pentylgruppe ist (Verbindung 32);
- Verbindung, in der das genannte Monosaccharid oder Disaccharid Galactose ist, genanntes Chromophor 1-Amino-2-phenoxy-4-hydroxyanthrachinon ist und genannter Spacer eine Pentylgruppe ist (Verbindung 33);

14. Verfahren zur Herstellung eines Farbmittels, das ein Chromophor umfasst, das über einen Spacer an ein oder mehrere neutrale, natürliche Monosaccharide oder Disaccharide gebunden ist,
wobei genanntes Verfahren die folgenden Schritte umfasst:
i) Schützen aller freien Hydroxylgruppen des genannten Monosaccharids oder Disaccharids, außer derjenigen, die als aktive Bindungsstelle gewählt wurde;
i') Zur Reaktion Bringen des aus Schritt i) stammenden, geschützten Monosaccharids oder Disaccharids mit einem Derivat des Spacers, das mit der restlichen freien Hydroxylgruppe und mit dem Chromophor reagieren kann;
ii) Zur Reaktion Bringen des genannten Chromophors mit dem aus Schritt i') stammenden Monosaccharid oder Disaccharid, um ein Produkt zu erhalten, welches das Chromophor gebunden an das geschützte und mit dem Spacer modifizierte Monosaccharid oder Disaccharid umfasst;
iii) Entschützen des aus Schritt ii) stammenden Produkts, um das gewünschte Endprodukt zu erhalten, in welchem das Chromophor über den genannten Spacer an das Monosaccharid oder Disaccharid gebunden ist.

15. Verfahren gemäß Anspruch 14, wobei das genannte Monosaccharid oder Disaccharid in Schritt i) mit Isopropylidengruppen geschützt wird.

16. Verfahren gemäß Anspruch 14, wobei das genannte Schützen in Schritt i) mit 2,2-Dimethoxypropan in der Gegenwart von katalytischen Mengen p-Toluolsulfonsäure durchgeführt wird.

17. Verfahren gemäß Anspruch 14, wobei, wenn ein Endprodukt mit einer Diacylgruppe als Spacer gewünscht wird, die Reaktion in Schritt i') durch Veresterung des aus Schritt i) stammenden, geschützten Monosaccharids oder Disaccharids mit dem korrespondierenden Anhydrid durchgeführt wird.

18. Verfahren gemäß Anspruch 14, wobei, wenn ein Endprodukt mit einer linearen Alkylgruppe mit 2 bis 6 Kohlenstoffatomen als Spacer gewünscht wird, die Reaktion in Schritt i') ausgeführt wird, indem das aus Schritt i) stammende, geschützte Mono- oder Disaccharid mit dem korrespondierenden Dibromalkan zur Reaktion gebracht wird.

19. Verfahren gemäß Anspruch 14, wobei die genannte Reaktion in Schritt ii) in einem Lösungsmittel in der Gegenwart von katalytischen Mengen eines Aktivierungsmittels durchgeführt wird.

20. Verfahren gemäß Anspruch 19, wobei das genannte Lösungsmittel Tetrahydrofuran ist und das genannte Aktivierungsmittel aus Dimethylaminopyridin und N'-(3-Dimethylaminopropyl)-N-ethylcarbodiimid ausgewählt wird.

21. Verfahren gemäß Anspruch 14, wobei das genannte Entschützen in Schritt iii} durch eine saure Hydrolyse durchgeführt wird.

22. Verfahren gemäß Anspruch 21, wobei das genannte Entschützen in Schritt iii} durch eine Behandlung mit einer wässrigen Lösung von 90 %iger Trifluoressigsäure bei Raumtemperatur oder durch Erhitzen und Behandeln mit weniger aggressiven Säuren wie z. B. einer 60 - 80 %iger Essigsäure durchgeführt wird.

23. Zusammensetzung zum Färben, umfassend mindestens ein Farbmittel, das ein Chromophor enthält, das über einen Spacer an ein oder mehrere neutrale, natürliche Monosaccharide oder Disaccharide gebunden ist, und gegebenenfalls ein oder mehrere Textilhilfsmittel.

24. Zusammensetzung zum Färben gemäß Anspruch 23, in der Form eines Pulvers.

25. Zusammensetzung zum Färben gemäß Anspruch 23, in der Form einer Paste oder wässrigen Dispersion.

26. Zusammensetzung zum Färben gemäß Anspruch 24, des Weiteren umfassend mindestens ein Trocknungsmittel.

27. Verwendung eines Farbmittels, umfassend ein Chromophor, das über einen Spacer an ein oder mehrere neutrale, natürliche Monosaccharide oder Disaccharide gebunden ist, als Farbstoff für Textilprodukte.

28. Verwendung gemäß Anspruch 27, wobei die genannten Textilprodukte Produkte mit gemischten, sowohl cellulosischen als auch hydrophoben Fasern sind.

## Revendications

1. Agent colorant comprenant un chromophore, **caractérisé en ce que** ledit chromophore est lié à un ou plusieurs monosaccharide ou di-saccharide neutres, naturels, par un espaceur, à condition que les composés qui suivent (a)-(c), comprenant un chromophore et un espaceur,
(a) X- [- (CₙH₂ₙ) -NH- (CₘH₂ₘ) -W-B (OH)₂]ₚ
où:
X est un chromophore ou un fluorophore;
W est un cycle aromatique facultativement substitué;
n est 0, 1 ou 2;
m est 1 ou 2; et
p est 1 ou 2; 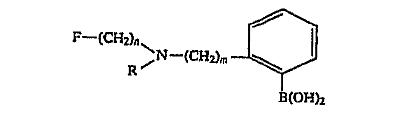
où:
F représente un fluorophore;
R est sélectionné dans le groupe consistant en groupes fonctionnels, aliphatiques et aromatiques inférieurs et n et m est chacun de 0, 1 ou 2 avec n+m étant de 2 ou 3;
et 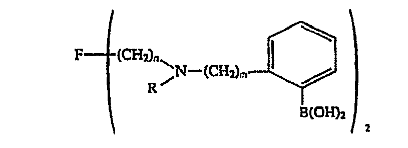
où:
F représente un fluorophore;
R est sélectionné dans le groupe consistant en groupes fonctionnels aliphatiques et aromatiques inférieurs et m et
n est chacun 0, 1 ou 2 avec n+m étant 2 ou 3;
soient exclus.

2. Agent colorant selon la revendication 1, où ledit chromophore comprend des groupes fonctionnalisables.

3. Agent colorant selon la revendication 2, où lesdits groupes fonctionnalisables sont sélectionnés dans le groupe consistant en COOH, OH, CN halogénures et NH₂.

4. Agent colorant selon la revendication 1, où ledit chromophore est sélectionné parmi des chromophores azoïques.

5. Agent colorant selon la revendication 1, où ledit chromophore est sélectionné parmi des chromophores anthraquinoniques.

6. Agent colorant selon la revendication 4, où ledit chromophore azoïque est sélectionné dans le groupe consistant en 2-[éthyl-(4'-phénylazo-phényl)amino]-éthanol, 2-[hydroxy-éthyl-(4'-phénylazo-phényl)-amino]-éthanol, 2-[(4'-phénylazo-phényl)-amino]-éthanol, 2-[hydroxy-éthyl-(4'-para-nitro-phénylazo-phényl)-amino]-éthanol, 3-[(4'-phénylazo-phényl)-amino]-propionitrile et 4-phénylazo-(2'-méthoxy-4'-phénylazo-4"-nitro)-phénol.

7. Agent colorant selon la revendication 5, où ledit chromophore anthraquinonique est sélectionné dans le groupe consistant en 1-amino-anthraquinone 1-amino-2-phénoxy-4-hydroxyantraquinone.

8. Agent colorant selon la revendication 1, où ledit espaceur est lié de manière covalente audit chromophore d'un côté et à un groupe hydrophile primaire ou secondaire dudit mono- ou di-saccharide de l'autre côté.

9. Agent colorant selon la revendication 1, où ledit monosaccharide est sélectionné dans le groupe consistant en glucose, galactose, mannose, rhamnose et fructose.

10. Agent colorant selon la revendication 1, où ledit disaccharide est sélectionné dans le groupe consistant en lactose, saccharose, cellobiose et maltose.

11. Agent colorant selon la revendication 1, où ledit espaceur est sélectionné dans le groupe consistant en groupes acyles et diacyles ayant de 2 à 6 atomes de carbone dans la chaîne d'alkyle, et des groupes alkyles linéaires ayant de 2 à 6 atomes de carbone.

12. Agent colorant selon la revendication 11, où ledit espaceur est sélectionné dans le groupe consistant en groupes succinyle, propyle, butyle et pentyle.

13. Agent colorant selon la revendication 1-12, choisi parmi les composés qui suivent:
- composé dans lequel ledit mono-saccharide ou disaccharide est du lactose, ledit chromophore est 2-[hydroxy-éthyl-(4'-phénylazo-phényl)-amino]-éthanol et ledit espaceur est un groupe succinyle (Composé 11);
- composé dans lequel ledit mono-saccharide ou disaccharide est du glucose, ledit chromophore est 2-[éthyl-(4'-phénylazo-phényl)-amino]-éthanol et ledit espaceur est un groupe succinyle (Composé 15);
- Composé dans lequel ledit mono-saccharide ou disaccharide est galactose, ledit chromophore est 2-[éthyl-(4'-phénylazo-phényl)-amino]-éthanol et ledit espaceur est un groupe succinyle (Composé 16);
- Composé dans lequel ledit mono-saccharide ou disaccharide est du glucose, ledit chromophore est 2-[éthyl-(4'-phénylazo-phényl)-amino]-éthanol et ledit espaceur est un groupe butyle (Composé 23);
- Composé dans lequel ledit mono-saccharide ou disaccharide est du glucose, ledit chromophore est 2-[éthyl-(4'-phénylazo-phényl)-amino]-éthanol et ledit espaceur est un groupe propyle (Composé 24);
- Composé dans lequel ledit mono-saccharide ou disaccharide est galactose, ledit chromophore est 2-[éthyl-(4'-phénylazo-phényl)-amino]-éthanol et ledit espaceur est un groupe pentyle (Composé 25);
- Composé dans lequel ledit mono-saccharide ou disaccharide est du lactose, ledit chromophore est 2-[hydroxy éthyl-(4'-para-nitro-phénylazo-phényl)-amino]-éthanol et ledit espaceur est un groupe succinyle (Composé 26);
- Composé dans lequel ledit mono-saccharide ou disaccharide est galactose, ledit chromophore est 2-[hydroxyéthyl-(4'-para-nitro-phénylazo-phényl)-amino]-éthanol et ledit espaceur est un groupe pentyle (Composé 27);
- Composé dans lequel ledit mono-saccharide ou disaccharide est galactose, ledit chromophore est 2-[hydroxyéthyl-(4'-para-nitro-phénylazo-phényl)-amino]-éthanol et ledit espaceur est un groupe pentyle (Composé 29);
- Composé dans lequel ledit mono-saccharide ou disaccharide est galactose, ledit chromophore est 2-[hydroxyéthyl-(4'-para-nitro-phénylazo-phényl)-amino]-éthanol et ledit espaceur est un groupe pentyle (Composé 30);
- Composé dans lequel ledit mono-saccharide ou disaccharide est galactose, ledit chromophore est 1-amino-anthraquinone et ledit espaceur est un groupe pentyle (Composé 31);
- Composé dans lequel ledit mono-saccharide ou disaccharide est du glucose, ledit chromophore est 1-amino-anthraquinone et ledit espaceur est un groupe pentyle (Composé 32);
- Composé dans lequel ledit mono-saccharide ou disaccharide est galactose, ledit chromophore est 1-amino-2-phénoxy-4-hydroxyanthraquinone et ledit espaceur est un groupe pentyle (Composé 33);

14. Procédé pour la préparation d'un agent colorant comprenant un chromophore lié à un ou plusieurs monosaccharide ou di-saccharide neutre, naturel, par un espaceur,
ledit procédé comprenant les étapes qui suivent:
i) protection de tous les groupes hydroxyliques libres dudit mono-saccharide ou di-saccharide à l'exception de celui choisi comme site actif de liaison;
i') réaction dudit mono-saccharide ou di-saccharide protégé provenant de l'étape i) avec un dérivé de l'espaceur capable de réagir avec le groupe sans hydroxyle libre résiduel et avec le chromophore;
ii) réaction dudit chromophore avec le mono-saccharide ou di-saccharide provenant de l'étape i'), pour obtenir un produit comprenant le chromophore lié au mono-saccharide ou di-saccharide protégé et modifié par l'espaceur;
iii) suppression de la protection du produit provenant de l'étape ii) pour obtenir le produit final souhaité où le chromophore est lié à la molécule du mono-saccharide ou disaccharide par ledit espaceur.

15. Procédé selon la revendication 14, où ledit monosaccharide ou di-saccharide est protégé à l'étape i) par des groupes isopropylidéniques.

16. Procédé selon la revendication 14, où ladite protection à l'étape i) est effectuée avec du 2,2-diméthoxypropane en présence de quantités catalytiques d'acide p-toluènesulfonique.

17. Procédé selon la revendication 14, où quand un produit final ayant un groupe diacyle comme espaceur est voulu, la réaction de l'étape i') est accomplie par estérification du mono- ou di-saccharide protégé provenant de l'étape i) avec l'anhydride correspondant.

18. Procédé selon la revendication 14, où quand un produit final ayant un groupe alkyle linéaire avec 2 à 6 atomes de carbone comme espaceur est voulu, la réaction à l'étape i') est effectuée par réaction du mono- ou di-saccharide protégé provenant de l'étape i) avec le dibromo-alcane correspondant.

19. Procédé selon la revendication 14, où ladite réaction à l'étape ii) est effectuée dans un solvant en présence de quantités catalytiques d'un agent activant.

20. Procédé selon la revendication 19, où ledit solvant est du tétrahydrofuranne et ledit agent activant est sélectionné parmi diméthyl-amino-pyridine et N'-(3-diméthylaminopropyl)-N-éthylcarbodiimide.

21. Procédé selon la revendication 14, où ladite pression de protection à l'étape iii) est effectuée par hydrolyse acide.

22. Procédé selon la revendication 21, où ladite suppression de protection à l'étape iii) est effectuée par un traitement à température ambiante avec une solution aqueuse de 90% d'acide trifluoroacétique ou lors d'un chauffage et d'un traitement avec des acides moins agressifs comme de l'acide acétique à 60-80%.

23. Composition de teinture comprenant au moins un agent colorant comprenant un chromophore lié à un ou plusieurs mono-saccharide ou di-saccharide neutre, naturel par un espaceur et éventuellement un ou plusieurs auxiliaires textiles.

24. Composition de teinture selon la revendication 23, sous la forme d'une poudre.

25. Composition de teinture selon la revendication 23, sous la forme d'une pâte ou d'une dispersion aqueuse.

26. Composition de teinture selon la revendication 24, comprenant de plus au moins un agent séchant.

27. Utilisation d'un agent colorant comprenant un chromophore lié à un ou plusieurs mono-saccharide ou disaccharide neutre, naturel, par un espaceur, comme colorant pour des produits textiles.

28. Utilisation selon la revendication 27, où lesdits produits textiles sont des produits avec des fibres mélangées à la fois cellulosiques et hydrophobes.
